(19) **Europäisches Patentamt / European Patent Office / Office européen des brevets**

(11) **EP 3 696 027 B1**

(12) **EUROPEAN PATENT SPECIFICATION**

(45) Date of publication and mention
of the grant of the patent:
**19.03.2025 Bulletin 2025/12**

(21) Application number: **18783577.2**

(22) Date of filing: **13.09.2018**

(51) International Patent Classification (IPC):
**B60R 21/00** (2006.01)

(52) Cooperative Patent Classification (CPC):
**B60R 21/00;** B60R 2021/0027; B60R 2021/0088

(86) International application number:
**PCT/IB2018/056995**

(87) International publication number:
**WO 2019/073318 (18.04.2019 Gazette 2019/16)**

(54) **INFORMATION PROCESSING DEVICE FOR SADDLE-RIDDEN VEHICLE, AND INFORMATION PROCESSING METHOD FOR SADDLE-RIDDEN VEHICLE**

INFORMATIONSPROZESSOR FÜR GRÄTSCHSITZFAHRZEUG UND
INFORMATIONSVERARBEITUNGSVERFAHREN FÜR GRÄTSCHSITZFAHRZEUG

DISPOSITIF DE TRAITEMENT D'INFORMATIONS POUR VÉHICULE À SELLE, ET PROCÉDÉ DE
TRAITEMENT D'INFORMATIONS POUR VÉHICULE À SELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2017 JP 2017197186**

(43) Date of publication of application:
**19.08.2020 Bulletin 2020/34**

(73) Proprietor: **Robert Bosch GmbH
70442 Stuttgart (DE)**

(72) Inventor: **FUKUZAWA, Keiichiro
Yokohama-shi
Kanagawa 2248501 (JP)**

(56) References cited:
EP-A1- 1 719 667          WO-A1-2008/046692
DE-A1- 102007 030 313     JP-A- 2009 290 789
JP-B1- 6 125 135          US-A1- 2003 135 346

**Description**

Technical Field

The present invention relates to an information processor and an information processing method for recognizing that a straddle-type vehicle has crashed during travel.

Background Art

As a conventional vehicle information processor, a vehicle information processor that includes a travel state information acquisition section, a crash recognition section, and an output section has been available. The travel state information acquisition section acquires information related to a travel state of a vehicle, the crash recognition section recognizes that the vehicle has crashed during travel on the basis of the information acquired by the travel state information acquisition section, and the output section makes output corresponding to the recognition of the crash by the crash recognition section. As the information related to the travel state, the travel state information acquisition section acquires acceleration that is generated in the vehicle during the travel. The crash recognition section recognizes that the vehicle has crashed during the travel in the case where the acceleration exceeds a threshold value (for example, see PTL 1).
DE 10 2007 030313 discloses a method and a control device, for activating personal protection means for a vehicle, a feature vector with at least two features being determined and the two features being derived from at least one signal from an accident sensor system. The feature vector is classified as a function of a comparison with at least one class boundary. The personal protection equipment is activated depending on the classification. A confidence measure is determined as a function of a position of the at least one feature vector in relation to the at least one class boundary. The personal protection equipment is actuated as a function of this confidence measure.

Citation List

Patent Literature

PTL 1: JP-A-2009-290789

Summary of Invention

Technical Problem

A target of the conventional vehicle information processor is a vehicle with relatively high travel stability such as an automobile or a track, that is, a vehicle in which a change in the acceleration generated during the travel is relatively small. In addition, a target of the crash recognition by the conventional vehicle information processor is a vehicle with relatively high occupant safety such as the automobile or the track. Accordingly, in the case where the conventional vehicle information processor is used as a straddle-type vehicle information processor for a purpose of recognizing that a straddle-type vehicle has crashed during travel, a frequency of the erroneous recognition that the straddle-type vehicle has crashed is increased due to the relatively significant change in the acceleration generated during the travel. In addition, in the case where the threshold value is set high so as to suppress such an increase, a delay occurs to the recognition of the crash despite a fact that the occupant safety is relatively low.
The present invention has been made with the above-described problems as the background, and therefore obtains a straddle-type vehicle information processor and a straddle-type vehicle information processing method capable of recognizing that a straddle-type vehicle has crashed during travel with a high degree of accuracy at appropriate timing to contribute to improvement in occupant safety.

Solution to Problem

The present invention is a straddle-type vehicle information processor according to claim 1.
The present invention is a straddle-type vehicle information processing method according to claim 8.

Advantageous Effects of Invention

In the straddle-type vehicle information processor and the straddle-type vehicle information processing method according to the present invention, the physical quantity set, which is configured to include the at least two types of the physical quantities, is acquired as the information related to the travel state of the straddle-type vehicle, the Mahalanobis distance is acquired with respect to the referred sample group of the physical quantity set, and it is determined whether the crash has occurred on the basis of the relationship between the Mahalanobis distance and the reference value. That is, it is determined whether the crash has occurred in consideration of dispersion states of the at least two types of the physical quantities in a no-crash state. Accordingly, even in the case where acceleration of the straddle-type vehicle is abruptly increased during the travel, such erroneous recognition that the straddle-type vehicle has crashed can be prevented. In addition, it is possible to recognize that the straddle-type vehicle has crashed at a stage before the acceleration is extremely increased. Therefore, the present invention can contribute to improvement in occupant safety.

Brief Description of Drawings

[Fig. 1] Fig. 1 is a diagram of an exemplary system configuration of a straddle-type vehicle information processor according to an embodiment of the present invention.
[Fig. 2] Fig. 2 is a flowchart of an exemplary operation of the straddle-type vehicle information processor according to the embodiment of the present invention.
[Fig. 3] Fig. 3 is a graph illustrating action in a crash recognition step executed by a crash recognition section of the straddle-type vehicle information processor according to the embodiment of the present invention.
[Fig. 4] Fig. 4 is a graph illustrating the action in the crash recognition step executed by the crash recognition section of the straddle-type vehicle information processor according to the embodiment of the present invention.

Description of Embodiment

A description will hereinafter be made on a straddle-type vehicle information processor and a straddle-type vehicle information processing method according to the present invention by using the drawings. Note that a configuration, an operation, and the like, which will be described below, constitute merely one example and each of the straddle-type vehicle information processor and the straddle-type vehicle information processing method according to the present invention is not limited to a case with such a configuration, such an operation, and the like.

Embodiment

A description will hereinafter be made on a straddle-type vehicle information processor according to an embodiment.

<Configuration of Straddle-Type Vehicle Information Processor>

A description will be made on a configuration of the straddle-type vehicle information processor according to the embodiment.

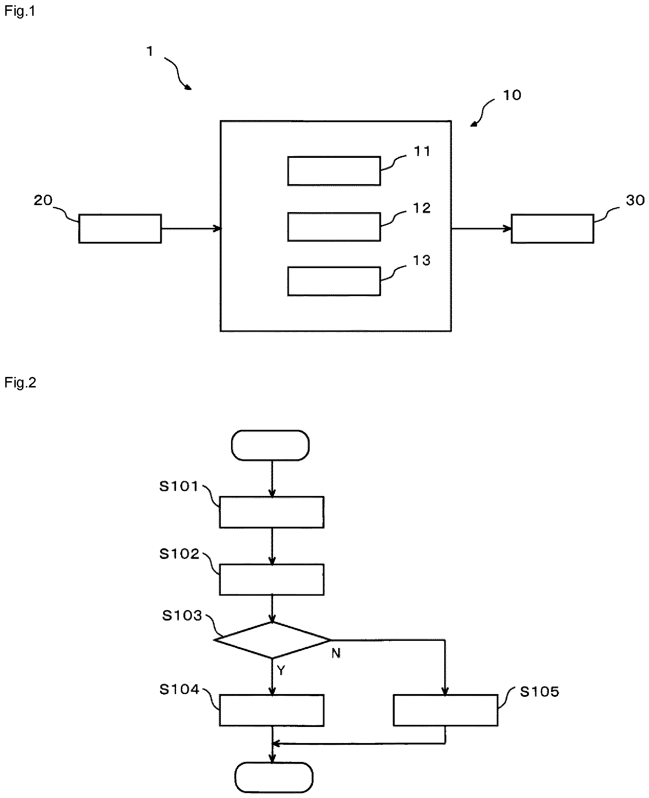

Fig. 1 is a diagram of an exemplary system configuration of the straddle-type vehicle information processor according to the embodiment of the present invention.
As illustrated in Fig. 1, a straddle-type vehicle information processor 10 includes a travel state information acquisition section 11, a crash recognition section 12, and an output section 13. The straddle-type vehicle information processor 10 is mounted on a straddle-type vehicle 1. The straddle-type vehicle 1 means a type of a vehicle on which an occupant is seated in a manner to straddle. Examples of the straddle-type vehicle 1 are a motorcycle (a two-wheeled motor vehicle, a three-wheeled motor vehicle, and the like) and an all-terrain vehicle.
A travel state information sensor 20 that is mounted on the straddle-type vehicle 1 is connected to the straddle-type vehicle information processor 10. When the travel state information acquisition section 11 receives output of the travel state information sensor 20, the travel state information acquisition section 11 acquires information related to a travel state of the straddle-type vehicle 1. As the information related to the travel state of the straddle-type vehicle 1, the travel state information acquisition section 11 continuously acquires a physical quantity set s that is configured to include at least two types of physical quantities at a time point.
The travel state information sensor 20 is an inertial measurement unit (IMU) that includes a three-axis gyroscope sensor and a three-directional acceleration sensor, for example. In such a case, the travel state information acquisition section 11 acquires, as the information related to the travel state of the straddle-type vehicle 1, the physical quantity set s that is configured to include the two types or more of the physical quantities among an angular velocity and acceleration generated in the straddle-type vehicle 1 during travel (that is, six types of the physical quantities). The travel state information acquisition section 11 may receive the angular velocity itself from the travel state information sensor 20 or may receive, as the angular velocity, another physical quantity that can substantially be converted to the angular velocity.

Alternatively, the travel state information acquisition section 11 may receive the acceleration itself from the travel state information sensor 20 or may receive, as the acceleration, another physical quantity that can substantially be converted to the acceleration.

The crash recognition section 12 acquires a Mahalanobis distance MHD with respect to a referred sample group of the physical quantity set s that is acquired by the travel state information acquisition section 11, and determines whether the straddle-type vehicle 1 has crashed on the basis of a relationship between the Mahalanobis distance MHD and a reference value Th. The referred sample group is referred data that is configured to include plural referred physical quantity sets S (that is, the physical quantity sets, each of which is referred and is configured to include the same types of the physical quantities as the physical quantity set s). The referred sample group may be input and stored in advance (for example, upon shipment), or may be generated from the plural physical quantity sets s that have been acquired by the travel state information acquisition section 11 in the past. In addition, the crash recognition section 12 may acquire the Mahalanobis distance MHD itself or may acquire, as the Mahalanobis distance MHD, another parameter that can substantially be converted to the Mahalanobis distance MHD.

The output section 13 outputs a trigger signal to an execution device 30 when the crash recognition section 12 recognizes that the straddle-type vehicle 1 has crashed. When receiving the trigger signal, the execution device 30 performs an operation to inform a rescue facility that the straddle-type vehicle 1 has crashed, for example. In addition, when receiving the trigger signal, the execution device 30 performs an operation to protect the occupant of the straddle-type vehicle 1 (for example, an operation to activate an airbag, or the like), for example.

In the straddle-type vehicle information processor 10, the sections may collectively be accommodated in a single casing, or each of the sections may be provided in a separate casing. In addition, the straddle-type vehicle information processor 10 may be incorporated in the execution device 30 or may not be incorporated in the execution device 30. Furthermore, the straddle-type vehicle information processor 10 may partially or entirely be constructed of a microcomputer, a microprocessor unit, or the like, may be constructed of a member in which firmware and the like can be updated, or may be a program module or the like that is executed by a command from a CPU or the like, for example.

<Operation of Straddle-Type Vehicle Information Processor>

A description will be made on an operation of the straddle-type vehicle information processor according to the embodiment.

The following description will be made on a case where the physical quantity set s configured to include two types of physical quantities x1, x2 is acquired in a travel state information acquisition step. However, in the travel state information acquisition step, the physical quantity set s that is configured to include three types or more of the physical quantities may be acquired, and the Mahalanobis distance MHD may be derived with respect to such a physical quantity set s.

Fig. 2 is a flowchart of an exemplary operation of the straddle-type vehicle information processor according to the embodiment of the present invention.

The straddle-type vehicle information processor 10 repeatedly executes step S101 to step S105 illustrated in Fig. 2 when the straddle-type vehicle 1 is in the travel state.

(Travel State Information Acquisition Step)

In step S101, the travel state information acquisition section 11 acquires, as the information related to the travel state of the straddle-type vehicle 1, the two types of the physical quantities x1, x2 at the time point. That is, the travel state information acquisition section 11 acquires the physical quantity set s at the time point. Each of the two types of the physical quantities x1, x2 may be raw data (that is, unprocessed data) that is detected by the travel state information sensor 20, or may be data that is acquired by eliminating noise from the raw data (that is, the unprocessed data) detected by the travel state information sensor 20.

In particular, each of the physical quantities x1, x2 is preferably data that is acquired by treating the raw data (that is, the unprocessed data) detected by the travel state information sensor 20 with a median filter. The median filter is used to replace the raw data (that is, the unprocessed data) acquired at a certain time point to the raw data (that is, the unprocessed data), a magnitude of which is ranked in the middle in a group of the raw data (that is, the unprocessed data) acquired in a specified period before and after the certain time point. Various types of the noise can be eliminated by appropriately setting duration of the specified period before and after the certain time point.

(Crash Recognition Step)

Next, in step S102, the crash recognition section 12 acquires the Mahalanobis distance MHD with respect to the referred sample group of the physical quantity set s acquired in step S101. The crash recognition section 12 may derive the Mahalanobis distance MHD by calculation, or may derive the Mahalanobis distance MHD by referring to a lookup table that is created in advance, or the like.

More specifically, the Mahalanobis distance MHD is derived as a value that is calculated by the following equation 1. Note that x1, x2 in the equation 1 are the physical quantities x1, x2 of the physical quantity set s acquired in step S101. In addition, $\mu$1 in the equation 1 is an average of a physical quantity X1 (a referred value of the same type of the physical quantity as the physical quantity x1) of the plural referred physical quantity sets S that constitute the referred sample group. Furthermore, $\mu$2 in the equation 1 is an average of a physical quantity X2 (a referred value of the same type of the physical quantity as the physical quantity x2) of the plural referred physical quantity sets S that constitute the referred sample group. Moreover, $\Sigma$ in the equation 1 is a covariance matrix of the physical quantities X1, X2 of the plural referred physical quantity sets S that constitute the referred sample group.

[Equation 1]

$$MHD = \left\{ \left( \begin{pmatrix} x1 \\ x2 \end{pmatrix} - \begin{pmatrix} \mu1 \\ \mu2 \end{pmatrix} \right)^{T} \Sigma^{-1} \left( \begin{pmatrix} x1 \\ x2 \end{pmatrix} - \begin{pmatrix} \mu1 \\ \mu2 \end{pmatrix} \right) \right\}^{1/2}$$

Next, in step S103, the crash recognition section 12 determines whether the derived Mahalanobis distance MHD exceeds the reference value Th. If the Mahalanobis distance MHD exceeds the reference value Th, the processing proceeds to step S104. If the Mahalanobis distance MHD does not exceed the reference value Th, the processing proceeds to step S105. Note that the reference value Th may be a constant value or may be a variation value. In addition, the crash recognition section 12 may determine whether a change rate of the Mahalanobis distance MHD exceeds the reference value Th, or may determine whether a time in which the Mahalanobis distance MHD keeps exceeding the reference value Th exceeds a reference time.

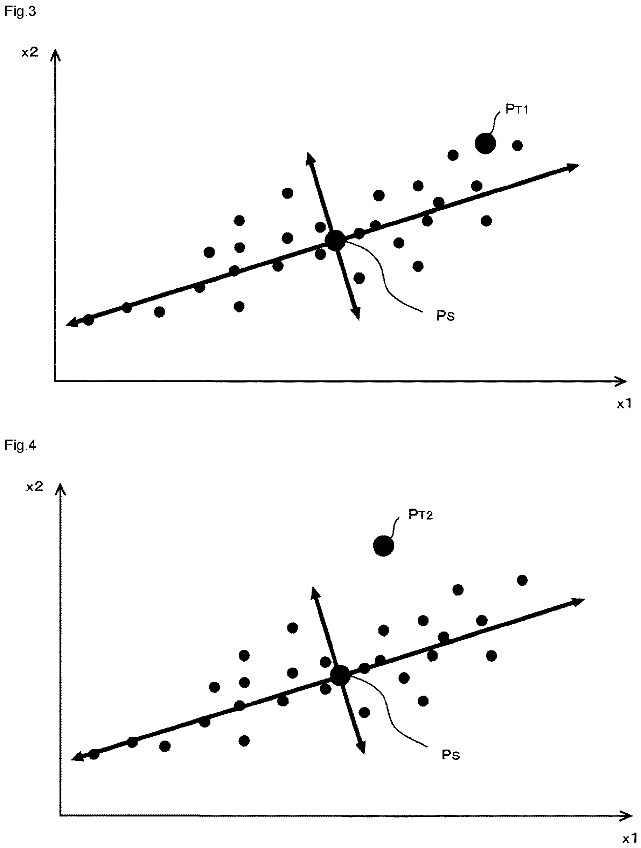

Each of Fig. 3 and Fig. 4 is a graph illustrating action in the crash recognition step that is executed by the crash recognition section of the straddle-type vehicle information processor according to the embodiment of the present invention.

Note that, in Fig. 3 and Fig. 4, a horizontal axis represents the physical quantity x1, and a vertical axis represents the physical quantity x2. In addition, in Fig. 3 and Fig. 4, a coordinate of each of the referred physical quantity sets S, which constitute the referred sample group, is plotted using a small dot, and an average coordinate $P_s$ of all of the referred physical quantity sets S, which constitute the referred sample group, is dotted using a large dot. Furthermore, in Fig. 3, a coordinate $P_{T1}$ of a physical quantity set s1 that is acquired at a time point T1 is plotted using a large dot, and in Fig. 4, a coordinate $P_{T2}$ of a physical quantity set s2 that is acquired at a time point T2 is plotted using a large dot.

In an example illustrated in Fig. 3, the physical quantity set s1 (that is, the coordinate $P_{T1}$) that significantly deviates from the average coordinate $P_s$ is acquired. However, since the deviation of the physical quantity set s1 from the referred sample group is insignificant, the short Mahalanobis distance MHD is derived, and it is thus determined that the crash has not occurred. Meanwhile, in the example illustrated in Fig. 4, compared to the example illustrated in Fig. 3, the physical quantity set s2 (that is, the coordinate $P_{T2}$) that slightly deviates from the average coordinate $P_s$ is acquired. However, since the deviation of the physical quantity set s2 from the referred sample group is significant, the long Mahalanobis distance MHD is derived, and it is thus determined that the crash has occurred. That is, the crash recognition section 12 can determine whether the crash has occurred in consideration of dispersion states of the two types of the physical quantities x1, x2 in a no-crash state.

Note that the crash recognition section 12 may vary the referred sample group in accordance with the travel state of the straddle-type vehicle 1. For example, the crash recognition section 12 may change the referred sample group, which is used to derive the Mahalanobis distance MHD, in accordance with a speed, the acceleration, a bank angle, vibrations, or the like generated in the straddle-type vehicle 1.

The travel state information acquisition section 11 may further acquire another physical quantity set s that has a different combination of the types of the physical quantities from the physical quantity set s and that is configured to include at least two types of the physical quantities, and the crash recognition section 12 may switch the physical quantity set s to the other physical quantity set s in accordance with the travel state of the straddle-type vehicle 1, so as to derive the Mahalanobis distance MHD. That is, in the case where the travel state information acquisition section 11 acquires the three types of the angular velocity and the three types of the acceleration (that is, the six types of the physical quantities) generated in the straddle-type vehicle 1 during the travel from the travel state information sensor 20, the crash recognition section 12 may switch the physical quantities, each of which is selected to constitute the physical quantity set s, in accordance with the speed, the acceleration, the bank angle, the vibrations, or the like generated in the straddle-type vehicle 1.

(Output Step)

Next, in step S104, the output section 13 outputs the trigger signal to the execution device 30. Meanwhile, in step S105, the output section 13 does not output the trigger signal to the execution device 30.

<Effects of Straddle-Type Vehicle Information Processor>

A description will be made on effects of the straddle-type vehicle information processor according to the embodiment.

In the straddle-type vehicle information processor 10, the travel state information acquisition section 11 acquires, as the information related to the travel state of the straddle-type vehicle 1, the physical quantity set s, which is configured to include the at least two types of the physical quantities (x1, x2), and the crash recognition section 12 acquires the Mahalanobis distance MHD with respect to the referred sample group of the physical quantity set s and determines whether the crash has occurred on the basis of the relationship between the Mahalanobis distance MHD and the reference value Th. That is, it is determined whether the crash has occurred in consideration of the dispersion states of the at least two types of the physical quantities (x1, x2) in the no-crash state. Accordingly, even in the case where the acceleration of the straddle-type vehicle 1 is abruptly increased during the travel, such erroneous recognition that the straddle-type vehicle 1 has crashed can be prevented. In addition, it is possible to recognize that the straddle-type vehicle 1 has crashed at a stage before the acceleration is extremely increased. Therefore, the present invention can contribute to improvement in the occupant safety.

Preferably, the physical quantity set s includes the acceleration or the angular velocity generated in the straddle-type vehicle 1. With such a configuration, it is possible to accurately determine whether the crash has occurred. Therefore, it is possible to recognize that the straddle-type vehicle 1 has crashed during the travel with a high degree of accuracy at appropriate timing to contribute to the improvement in the occupant safety, and realization of such recognition is improved.

Preferably, the crash recognition section 12 varies the referred sample group in accordance with the travel state of the straddle-type vehicle 1. With such a configuration, it is possible to optimize the determination on whether the crash has occurred in accordance with vehicle body behavior. In particular, compared to a vehicle such as an automobile or a track, the vehicle body behavior of the straddle-type vehicle 1 is changed drastically. Therefore, such a configuration is particularly advantageous for the straddle-type vehicle 1.

Preferably, the travel state information acquisition section 11 further acquires, as the information related to the travel state of the straddle-type vehicle 1, the other physical quantity set s, which is configured to include the at least two types of the physical quantities, the physical quantity set s and the other physical quantity set s have the different combinations of the types of the physical quantities from each other, and the crash recognition section 12 switches the physical quantity set s, which is used to determine whether the crash has occurred, to the other physical quantity set s in accordance with the travel state of the straddle-type vehicle 1. With such a configuration, it is possible to optimize the determination on whether the crash has occurred in accordance with the vehicle body behavior. In particular, compared to the vehicle such as the automobile or the track, the vehicle body behavior of the straddle-type vehicle 1 is changed drastically. Therefore, such a configuration is particularly advantageous for the straddle-type vehicle 1.

Preferably, the at least two types of the physical quantities (x1, x2) acquired by the travel state information acquisition section 11 are treated with the median filter. Compared to other filters (for example, a moving average filter, a high-pass filter, a low-pass filter, a bandpass filter, and the like), use of the median filter can suppress a delay occurred to the data that has been processed using the filter. Therefore, it is possible to recognize that the straddle-type vehicle 1 has crashed during the travel with the high degree of accuracy at the appropriate timing to contribute to the improvement in the occupant safety, and the realization of such recognition is improved by using the median filter.

Preferably, the straddle-type vehicle 1 is the two-wheeled motor vehicle. Since travel stability and the occupant safety of the two-wheeled motor vehicle are especially low, the characteristics thereof that have been described so far are particularly effective in the two-wheeled motor vehicle.

<Application Example of Operation of Straddle-Type Vehicle Information Processor>

In the description that has been made so far, the crash recognition section 12 recognizes that the straddle-type vehicle 1 has crashed during the travel only on the basis of the relationship between the Mahalanobis distance MHD, which is derived with respect to the physical quantity set s, and the reference value Th. The travel state information acquisition section 11 may further acquire, as the information related to the travel state of the straddle-type vehicle 1, a sub-physical quantity set ss that has a different combination of the types of the physical quantities from the physical quantity set s and is configured to include at least the two types of the physical quantities. The crash recognition section 12 may further acquire a sub-Mahalanobis distance MHDs that is the Mahalanobis distance with respect to a referred sample group of the sub-physical quantity set ss. That is, the crash recognition section 12 may make the determination on whether the straddle-type vehicle 1 has crashed during the travel on the basis of the relationship between the Mahalanobis distance MHD, which is derived with respect to the physical quantity set s, and the reference value Th and the determination on whether the straddle-type vehicle 1 has crashed during the travel on the basis of a relationship between the sub-Mahalanobis distance MHDs, which is derived with respect to the sub-physical quantity set ss, and a reference value Ths in parallel (that is, almost simultaneously). In this way, the crash recognition section 12 may recognize that the straddle-type vehicle 1 has crashed during the travel. With such a configuration, a response speed to the crash can be improved by making the high-sensitive determination while erroneous recognition of the crash by the low-sensitive determination is suppressed.

The description has been made so far on the embodiment. However, the present invention is not limited to the description of the embodiment. For example, only a part of the embodiment may be implemented, or parts of the embodiment may be combined.

Reference Signs List

> 1: Straddle-type vehicle
> 10: Straddle-type vehicle information processor
> 11: Travel state information acquisition section
> 12: Crash recognition section
> 13: Output section
> 20: Travel state information sensor
> 30: Execution device
> x1, x2: Physical quantity
> $P_s$: Average coordinate of referred sample group
> $P_{T1}$: Coordinate of physical quantity set s1 acquired at time point T1
> $P_{T2}$: Coordinate of physical quantity set s2 acquired at time point T2

**Claims**

1. A straddle-type vehicle information processor (10) mountable on a straddle-type vehicle (1), comprising:

   a travel state information acquisition section (11) that acquires information related to a travel state of a straddle-type vehicle (1);
   a crash recognition section (12) that recognizes that the straddle-type vehicle (1) has crashed during travel on the basis of the information acquired by the travel state information acquisition section (11); and
   an output section (13) that makes output corresponding to the recognition of the crash by the crash recognition section (12),
   wherein
   the travel state information acquisition section (11) acquires, as the information, a physical quantity set (s) that is configured to include at least two types of physical quantities (x1, x2), the information processor (10) **characterized in that**:
   the crash recognition section (12)

   acquires a Mahalanobis distance (MHD) of the physical quantity set (s) with respect to a referred sample group of the physical quantity set (s), which is acquired by the travel state information acquisition section (11), wherein the referred sample group relates to referred data that is configured to include a plurality of referred physical quantity sets (S), wherein each referred physical quantity set (S) is referred and configured to include the same types of the physical quantities as the physical quantity set (s), and
   determines whether the crash has occurred on the basis of a relationship between said Mahalanobis distance (MHD) and a reference value (Th).

2. The straddle-type vehicle information processor according to claim 1, wherein the physical quantity set (s) includes acceleration generated in the straddle-type vehicle (1).

3. The straddle-type vehicle information processor according to claim 1 or 2, wherein the physical quantity set (s) includes an angular velocity generated in the straddle-type vehicle (1).

4. The straddle-type vehicle information processor according to any one of claims 1 to 3, wherein the crash recognition section (12) is configured to vary the referred sample group in accordance with the travel state of the straddle-type vehicle (1).

5. The straddle-type vehicle information processor according to any one of claims 1 to 4,

wherein the travel state information acquisition section (11) further acquires, as the information, a sub-physical quantity set (ss) that is configured to include at least two types of the physical quantities, the physical quantity set (s) and the sub-physical quantity set (ss) have different combinations of the types of the physical quantities from each other, and the crash recognition section (12) further acquires a sub-Mahalanobis distance (MHDs) that is the Mahalanobis distance with respect to a referred sample group of the sub-physical quantity set (ss) acquired by the travel state information acquisition section (11), and determines whether the crash has occurred on the basis of a relationship between said sub-Mahalanobis distance (MHDs) and a reference value (Ths), and makes the determination on the basis of the relationship between the Mahalanobis distance (MHD) and the reference value (Th) and the determination on the basis of the relationship between the sub-Mahalanobis distance (MHDs) and the reference value (Ths) in parallel, so as to recognize that the straddle-type vehicle (1) has crashed during the travel.

6. The straddle-type vehicle information processor according to any one of claims 1 to 5, wherein the at least two types of the physical quantities (x1, x2) acquired by the travel state information acquisition section (11) are treated with a median filter.

7. The straddle-type vehicle information processor according to any one of claims 1 to 6, wherein the straddle-type vehicle (1) is a two-wheeled motor vehicle.

8. An information processing method in a straddle-type vehicle information processor (10) mounted on a straddle-type vehicle (1), comprising:

a travel state information acquisition step (S101) of acquiring information related to a travel state of a straddle-type vehicle (1); a crash recognition step (S102, S103) of recognizing that the straddle-type vehicle (1) has crashed during travel on the basis of the information acquired in the travel state information acquisition step (S101); and an output step (S104, S105) of making output corresponding to the recognition of the crash in the crash recognition step (S102, S103), wherein in the travel state information acquisition step (S101), a physical quantity set (s) that is configured to include at least two types of physical quantities (x1, X2) is acquired as the information, the method **characterized in that** in the crash recognition step (S102, S103), a Mahalanobis distance (MHD) of the physical quantity set (s) is acquired with respect to a referred sample group of the physical quantity set (s) acquired in the travel state information acquisition step (S101), wherein the referred sample group relates to referred data that is configured to include a plurality of referred physical quantity sets (S), wherein each referred physical quantity set (S) is referred and configured to include the same types of the physical quantities as the physical quantity set (s), and it is determined whether the crash has occurred on the basis of a relationship between said Mahalanobis distance (MHD) and a reference value (Th).

**Patentansprüche**

1. Grätschsitzfahrzeuginformationsprozessor (10), der an einem Grätschsitzfahrzeug (1) montierbar ist, umfassend:

einen Fahrzustandsinformationserfassungsabschnitt (11), der Informationen in Bezug auf einen Fahrzustand eines Grätschsitzfahrzeugs (1) erfasst; einen Unfallerkennungsabschnitt (12), der auf Basis der durch den Fahrzustandsinformationserfassungsabschnitt (11) erfassten Informationen erkennt, dass das Grätschsitzfahrzeug (1) während einer Fahrt einen Unfall erlitten hat; und einen Ausgabeabschnitt (13), der eine Ausgabe entsprechend der Erkennung des Unfalls durch den Unfallerkennungsabschnitt (12) vornimmt, wobei der Fahrzustandsinformationserfassungsabschnitt (11) als die Informationen einen Satz (s) physikalischer Größen erfasst, der dazu ausgelegt ist, mindestens zwei Arten von physikalischen Größen (x1, x2) zu beinhalten, wobei der Informationsprozessor (10) **dadurch gekennzeichnet ist, dass**:

der Unfallerkennungsabschnitt (12) eine Mahalanobis-Distanz (MHD) des Satzes (s) physikalischer Größen in Bezug auf eine referenzierte Stichprobengruppe des Satzes (s) physikalischer Größen erfasst, der durch den Fahrzustandsinformationserfassungsabschnitt (11) erfasst wird, wobei sich die referenzierte Stichprobengruppe auf referenzierte Daten bezieht, die dazu ausgelegt sind, eine Mehrzahl von referenzierten Sätzen (S) physikalischer Größen zu beinhalten, wobei jeder referenzierte Satz (S) physikalischer Größen so referenziert und ausgelegt ist, dass er die gleichen Arten der physikalischen Größen wie der Satz (s) physikalischer Größen beinhaltet, und
auf Basis einer Beziehung zwischen der Mahalanobis-Distanz (MHD) und einem Referenzwert (Th) bestimmt, ob der Unfall stattgefunden hat.

2. Grätschsitzfahrzeuginformationsprozessor nach Anspruch 1, wobei der Satz (s) physikalischer Größen eine in dem Grätschsitzfahrzeug (1) erzeugte Beschleunigung beinhaltet.

3. Grätschsitzfahrzeuginformationsprozessor nach Anspruch 1 oder 2, wobei der Satz (s) physikalischer Größen eine in dem Grätschsitzfahrzeug (1) erzeugte Winkelgeschwindigkeit beinhaltet.

4. Grätschsitzfahrzeuginformationsprozessor nach einem der Ansprüche 1 bis 3, wobei der Unfallerkennungsabschnitt (12) dazu ausgelegt ist, die referenzierte Stichprobengruppe gemäß dem Fahrzustand des Grätschsitzfahrzeugs (1) zu variieren.

5. Grätschsitzfahrzeuginformationsprozessor nach einem der Ansprüche 1 bis 4, wobei der Fahrzustandsinformationserfassungsabschnitt (11) ferner als die Informationen einen Teilsatz (ss) physikalischer Größen erfasst, der dazu ausgelegt ist, mindestens zwei Arten der physikalischen Größen zu beinhalten,

wobei der Satz (s) physikalischer Größen und der Teilsatz (ss) physikalischer Größen voneinander unterschiedliche Kombinationen der Arten der physikalischen Größen aufweisen, und
wobei der Unfallerkennungsabschnitt (12) ferner eine Mahalanobis-Teildistanz (MHDs) erfasst, die die Mahalanobis-Distanz in Bezug auf eine referenzierte Stichprobengruppe des durch den Fahrzustandsinformationserfassungsabschnitt (11) erfassten Teilsatzes (ss) physikalischer Größen ist, und auf Basis einer Beziehung zwischen der Mahalanobis-Teildistanz (MHDs) und einem Referenzwert (Ths) bestimmt, ob der Unfall stattgefunden hat, und die Bestimmung auf Basis der Beziehung zwischen der Mahalanobis-Distanz (MHD) und dem Referenzwert (Th) und die Bestimmung auf Basis der Beziehung zwischen der Mahalanobis-Teildistanz (MHDs) und dem Referenzwert (Ths) parallel vornimmt, um zu erkennen, dass das Grätschsitzfahrzeug (1) während der Fahrt einen Unfall erlitten hat.

6. Grätschsitzfahrzeuginformationsprozessor nach einem der Ansprüche 1 bis 5, wobei die mindestens zwei Arten der physikalischen Größen (x1, x2), die durch den Fahrzustandsinformationserfassungsabschnitt (11) erfasst werden, mit einem Medianfilter behandelt werden.

7. Grätschsitzfahrzeuginformationsprozessor nach einem der Ansprüche 1 bis 6, wobei das Grätschsitzfahrzeug (1) ein zweirädriges Kraftfahrzeug ist.

8. Informationsverarbeitungsverfahren in einem Grätschsitzfahrzeuginformationsprozessor (10), der an einem Grätschsitzfahrzeug (1) montiert ist, umfassend:

einen Fahrzustandsinformationserfassungsschritt (S101) zum Erfassen von Informationen in Bezug auf einen Fahrzustand eines Grätschsitzfahrzeugs (1);
einen Unfallerkennungsschritt (S102, S103) zum Erkennen, dass das Grätschsitzfahrzeug (1) während einer Fahrt einen Unfall erlitten hat, auf Basis der in dem Fahrzustandsinformationserfassungsschritt (S101) erfassten Informationen; und
einen Ausgabeschritt (S104, S105) zum Vornehmen einer Ausgabe entsprechend der Erkennung des Unfalls in dem Unfallerkennungsschritt (S102, S103), wobei in dem Fahrzustandsinformationserfassungsschritt (S101) ein Satz (s) physikalischer Größen, der dazu ausgelegt ist, mindestens zwei Arten von physikalischen Größen (x1, X2) zu beinhalten, als die Informationen erfasst wird, wobei das Verfahren **dadurch gekennzeichnet ist, dass**

in dem Unfallerkennungsschritt (S102, S103) eine Mahalanobis-Distanz (MHD) des Satzes (s) physikalischer Größen in Bezug auf eine referenzierte Stichprobengruppe des in dem Fahrzustandsinformationserfassungsschritt (S101) erfassten Satzes (s) physikalischer Größen erfasst wird, wobei sich die referenzierte Stichprobengruppe auf referenzierte Daten bezieht, die dazu ausgelegt sind, eine Mehrzahl von referenzierten Sätzen (S) physikalischer Größen zu beinhalten, wobei jeder referenzierte Satz (S) physikalischer Größen so referenziert und ausgelegt ist, dass er die gleichen Arten der physikalischen Größen wie der Satz (s) physikalischer Größen beinhaltet, und

auf Basis einer Beziehung zwischen der Mahalanobis-Distanz (MHD) und einem Referenzwert (Th) bestimmt wird, ob der Unfall stattgefunden hat.

**Revendications**

1. Processeur d'informations de véhicule à selle (10) montable sur un véhicule à selle (1), comprenant :

   une section d'acquisition d'informations d'état de déplacement (11) qui acquiert des informations connexes à un état de déplacement d'un véhicule à selle (1) ;
   une section de reconnaissance de collision (12) qui reconnaît que le véhicule à selle (1) est entré en collision durant le déplacement, sur la base des informations acquises par la section d'acquisition d'informations d'état de déplacement (11) ; et
   une section de sortie (13) qui effectue une sortie correspondant à la reconnaissance de la collision par la section de reconnaissance de collision (12),
   dans lequel
   la section d'acquisition d'informations d'état de déplacement (11) acquiert, en tant qu'informations, un ensemble de quantités physiques (s) qui est configuré pour inclure au moins deux types de quantités physiques (x1, x2), le processeur d'informations (10) étant **caractérisé en ce que** :

   la section de reconnaissance de collision (12) acquiert une distance de Mahalanobis (MHD) de l'ensemble de quantités physiques (s) par rapport à un groupe échantillon consulté de l'ensemble de quantités physiques (s), qui est acquis par la section d'acquisition d'informations d'état de déplacement (11), dans lequel le groupe échantillon consulté concerne des données consultées qui sont configurées pour inclure une pluralité d'ensembles consultés de quantités physiques (S), dans lequel chaque ensemble consulté de quantités physiques (S) est consulté et configuré pour inclure les mêmes types des quantités physiques que l'ensemble de quantités physiques (s), et
   détermine si la collision s'est produite sur la base d'une relation entre ladite distance de Mahalanobis (MHD) et une valeur de référence (Th).

2. Processeur d'informations de véhicule à selle selon la revendication 1, dans lequel l'ensemble de quantités physiques (s) inclut une accélération générée dans le véhicule à selle (1).

3. Processeur d'informations de véhicule à selle selon la revendication 1 ou 2, dans lequel l'ensemble de quantités physiques (s) inclut une vitesse angulaire générée dans le véhicule à selle (1).

4. Processeur d'informations de véhicule à selle selon l'une quelconque des revendications 1 à 3, dans lequel la section de reconnaissance de collision (12) est configurée pour varier le groupe échantillon consulté conformément à l'état de déplacement du véhicule à selle (1).

5. Processeur d'informations de véhicule à selle selon l'une quelconque des revendications 1 à 4, dans lequel la section d'acquisition d'informations d'état de déplacement (11) acquiert en outre, en tant qu'informations, un sous-ensemble de quantités physiques (ss) qui est configuré pour inclure au moins deux types des quantités physiques,

   l'ensemble de quantités physiques (s) et le sous-ensemble de quantités physiques (ss) ont différentes combinaisons des types des quantités physiques l'un par rapport à l'autre, et
   la section de reconnaissance de collision (12) acquiert en outre un sous-distance de Mahalanobis (MHDs) qui est la distance de Mahalanobis par rapport à un groupe échantillon consulté du sous-ensemble de quantités physiques (ss) acquis par la section d'acquisition d'informations d'état de déplacement (11), et détermine si la collision s'est produite sur la base d'une relation entre ladite sous-distance de Mahalanobis (MHDs) et une valeur de référence (Ths), et effectue la détermination sur la base de la relation entre la distance de Mahalanobis (MHD) et la valeur de référence (Th) et la détermination sur la base de la relation entre le sous-distance de Mahalanobis (MHDs) et la valeur de référence (Ths) en parallèle, afin de reconnaître que le véhicule à selle (1) est entré en collision durant le déplacement.

6. Processeur d'informations de véhicule à selle selon l'une quelconque des revendications 1 à 5, dans lequel les au moins deux types des quantités physiques (x1, x2) acquises par la section d'acquisition d'informations d'état de déplacement (11) sont traités avec un filtre médian.

7. Processeur d'informations de véhicule à selle selon l'une quelconque des revendications 1 à 6, dans lequel le véhicule à selle (1) est un véhicule motorisé à deux roues.

8. Procédé de traitement d'informations dans un processeur d'informations de véhicule à selle (10) monté sur un véhicule à selle (1), comprenant :

une étape d'acquisition d'informations d'état de déplacement (S101) consistant à acquérir des informations connexes à un état de déplacement d'un véhicule à selle (1) ;
une étape de reconnaissance de collision (S102, S103) consistant à reconnaître que le véhicule à selle (1) est entré en collision durant le déplacement, sur la base des informations acquises dans l'étape d'acquisition d'informations d'état de déplacement (S101) ; et
une étape de sortie (S104, S105) consistant à effectuer une sortie correspondant à la reconnaissance de la collision dans l'étape de reconnaissance de collision (S102, S103), dans lequel
dans l'étape d'acquisition d'informations d'état de déplacement (S101), un ensemble de quantités physiques (s) qui est configuré pour inclure au moins deux types de quantités physiques (x1, X2) est acquis en tant qu'informations, le procédé étant **caractérisé en ce que**
dans l'étape de reconnaissance de collision (S102, S103), une distance de Mahalanobis (MHD) de l'ensemble de quantités physiques (s) est acquise par rapport à un groupe échantillon consulté de l'ensemble de quantités physiques (s) acquis dans l'étape d'acquisition d'informations d'état de déplacement (S101), dans lequel le groupe échantillon consulté concerne des données consultées qui sont configurées pour inclure une pluralité d'ensembles consultés de quantités physiques (S), dans lequel chaque ensemble consulté de quantités physiques (S) est consulté et configuré pour inclure les mêmes types des quantités physiques que l'ensemble de quantités physiques (s), et
il est déterminé si la collision s'est produite sur la base d'une relation entre ladite distance de Mahalanobis (MHD) et une valeur de référence (Th).

Fig.1

1

10

11

12

13

20

30

Fig.2

S101

S102

S103

Y

N

S104

S105

Fig.3

Fig.4

**EP 3 696 027 B1**

**REFERENCES CITED IN THE DESCRIPTION**

**Patent documents cited in the description**

- DE 102007030313
- JP 2009290789 A